# EUROPEAN PATENT SPECIFICATION

(11) **EP 2 594 859 B1**
(45) Date of publication and mention of the grant of the patent: **03.10.2018**
(21) Application number: 13155503.9
(22) Date of filing: 03.07.2008
(51) Int. Cl.: F24F 11/30, F24F 110/10, F24C 15/20

(54) **AIR CONTROL SYSTEM AND METHOD**
LUFTSTEUERSYSTEM UND -VERFAHREN
SYSTÈME ET PROCÉDÉ DE RÉGULATION DE L'AIR

(30) Priority: 04.07.2007 GB 0712978
(43) Date of publication of application: 22.05.2013
(62) Divisional of application: 08775820.7
(73) Proprietor: Quintex Systems Limited, London EC4A 3LX (GB)
(72) Inventor: Stevens, Leonard, Crowthorne, Berkshire RG45 6DU (GB); Stevens, Keith, Basingstoke, Hampshire RG25 2JZ (GB); Glover, Nell, Reading, Berkshire RG2 7AX (GB); Wyatt, Ben, Reading, Berkshire RG4 8NL (GB)
(74) Representative: Jenkins, Peter David

(56) References cited:
- GB-A- 2 209 070
- GB-A- 2 396 209
- US-A1- 2003 104 778
- US-A1- 2005 156 053

## Description

The present invention relates generally an air control system and to a method of controlling air. In particular, the present invention relates generally to the field of controlling air in buildings, and more specifically within kitchens, and most particularly commercial kitchens. Most particularly, the present invention provides an air control system and to a method of controlling air which can constitute an energy saving and safety system for restaurants and commercial catering.

US-A-6170480 discloses a commercial kitchen exhaust system in which a hood over a cooking unit is adapted to exhaust air to outside the kitchen at a plurality of flow rates. The volume rate of exhaust is controlled in response to a parameter of the ambient air environment outside the hood. The rate is increased from a first volume rate to a second volume rate when the parameter exceeds a desired comfort threshold. An environmental parameter correlated to temperature outside the facility is sensed and responsive thereto maintains the first volume rate irrespective of the sensed parameter.

The US patent discloses controlling the ambient air environment outside the hood and taking into account the air environment outside the building as the prime functions. When the ambient air environment conditions are satisfied and the outside temperature is taken into consideration, the control of the fan speed is from the temperature and contaminated air in the extract hood.

However, controlling the ambient air environment by varying the extract fan speed reduces energy savings and contravenes good practice, if not regulations, concerning minimum extract rates, air changes and maintaining a negative air pressure in the kitchen.

The system and method disclosed in US-A-6170480 suffer from the problem that although fans are controlled to vary the environment within the kitchen, nevertheless a more energy efficient system, combined with safety controls, is required. Also, a very complicated control system and control protocol is established. It is disclosed US-A-6170480 that the provision of a simple linear relationship between extract fan speed and temperature, with a minimum preset fan speed, does not provide optimal exhausting conditions. To attempt to overcome this alleged difficulty, US-A-6170480 provides a plurality of different curves (or "temperature spans") defining the relationship between temperature and fan speed, which curves are selectable depending on particular conditions, and also correspondingly individually variable depending on particular conditions. As regards energy saving, US-A-6170480 discloses that one particular curve or temperature span may be defined that minimizes the energy consumed by the hood while maintaining comfortable conditions within the kitchen or other space serviced by the hood. However, not only is this a complicated system to control energy consumption, also it does not necessarily minimise consumption under continuous day to day conditions, because other higher energy temperature spans may be activated by the control system. Furthermore, the selected temperature span may not necessarily achieve the desired, and legally required by health and safety provisions, conditions within the kitchen environment, in particular above the cooking appliance.

Patent document US-A-2005/0156053 describes an exhaust control system for a kitchen exhaust system comprising comprising an air extraction assembly comprising an extract hood, an extract fan, and at least two sensors located in the air extraction assembly for detecting at least two variable parameters of the air drawn through the extract hood, an air supplying assembly for supplying air in a food processing area which contains the cooking appliance, the air supplying assembly comprising an air supply fan, and a control device for controlling the speed of the extract fan, the control device having a preset speed module which is adapted to define a first preset relationship between the detected temperature and the speed of the extract fan.

The present invention aims at least partly to overcome these problems of the known air control system and method.
Accordingly, the present invention provides an air control system for removing heat, smoke and steam from above a cooking appliance according to claim 1.

The present invention also provides a method of removing heat, smoke and steam from above a cooking appliance using an air control system according to claim 13.

Preferred features of the present invention are defined in the dependent claims.

Embodiments of the present invention will now be described by way of example only, with reference to the accompanying drawings, in which:
Figure 1 is a schematic block diagram of an air control system in accordance with a first embodiment of the present invention;
Figure 2 is a schematic diagram of the air control system of Figure 1 showing the structural and functional arrangement of the components thereof;
Figure 3 is a flow chart showing schematically the operation of the sensor processor of the air control system of Figure 1;
Figure 4 is a flow chart showing schematically the operation of the extract fan speed control of the air control system of Figure 1;
Figure 5 is a flow chart showing schematically the operation of the display of the air control system of Figure 1;
Figure 6 is a flow chart showing schematically the operation of the display fault check of the air control system of Figure 1;
Figure 7 is a schematic block diagram of a data logging system for use with the air control system of Figure 1 in accordance with a further embodiment of the present invention; and
Figure 8 is a schematic block diagram of an air control system in accordance with a further embodiment of the present invention.

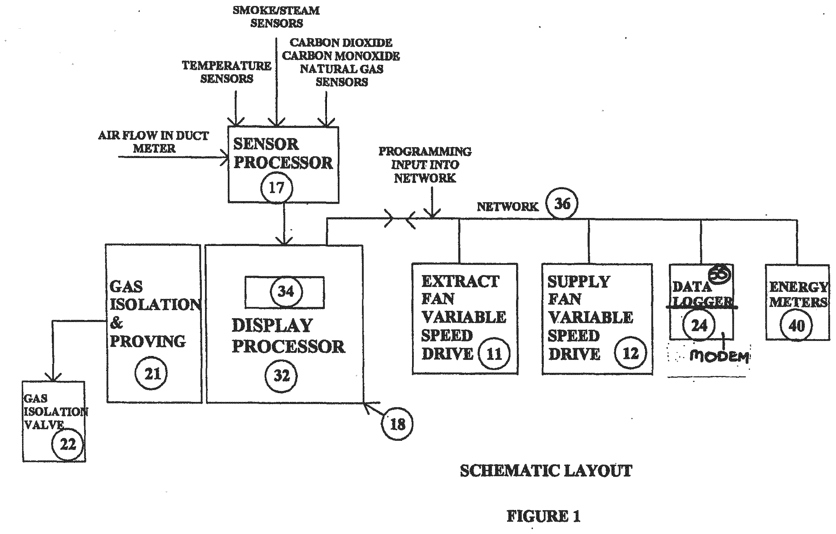

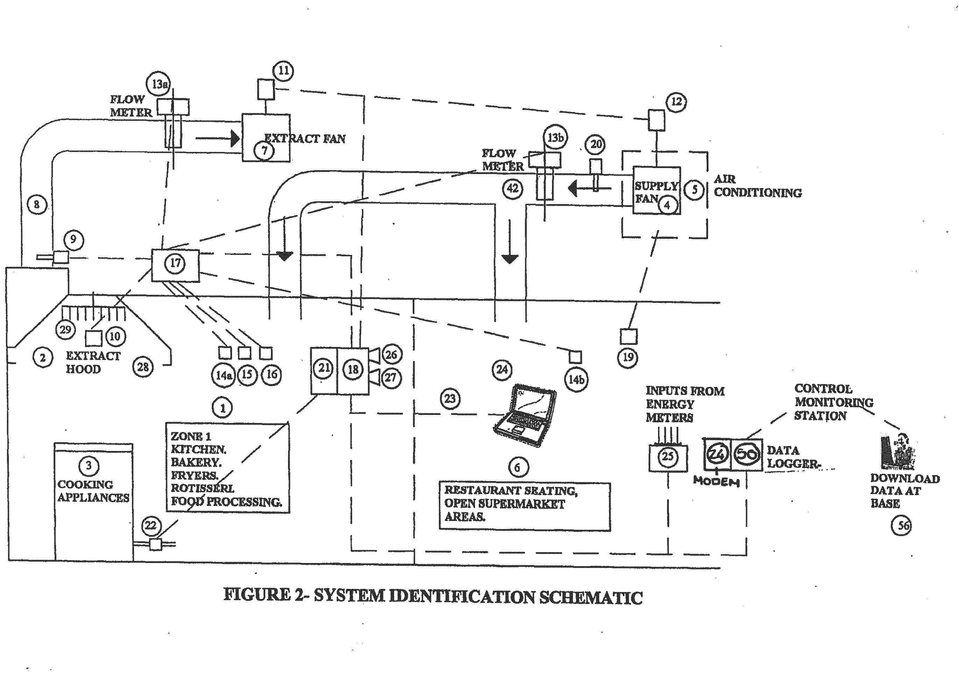

Referring to Figures 1 and 2, there is shown schematically an air control system in accordance with a first embodiment of the present invention.

The schematic layout of the air control system of the present invention is shown in Figure 1 and the structure of the air control system within a building is shown in Figure 2.

The building area within which the air control system of the present invention is provided to achieve the desired energy saving is centred in a zone 1 where food processing takes place. The zone 1 is usually a kitchen, such as the kitchen of a restaurant or a commercial catering establishment, but may alternatively comprise a bakery, fryer, rotisserie or the like, particularly in a supermarket. The zone 1 may be any facility where food processing is taking place with the production of heat, smoke, steam and gases in general. As is the normal situation in such facilities, an extract hood 2 is disposed above the at least one cooking appliance 3 where the food processing is taking place, and a make-up air supply, which is usually conditioned air from an air conditioning plant 5, and includes at least one supply fan 4 and ducting 42 to supply fresh air to the zone 1. The food processing zone 1 can be self contained or, as is much more common, fully or partially open to an adjacent area 6 such as the dining area in a restaurant, the shopping area in a supermarket or other processing areas. The ducting 42 can also supply fresh air to the area 6.

One or more extract fans 7 are provided for removing the heat, smoke and steam from the cooking process, and are usually connected to the extract hood 2 by ducting 8. The extract fans 7 are usually located outside the building. The air conditioning plant 5 is also usually located outside the building and provides fresh, filtered air to replace most of the contaminated air extracted. These components of an air supply system are known in the art, and in such a known system usually the extract and supply fans 7, 4 run continually at a fixed speed to cater for the worst environmental situation, with regard to temperature and air quality above the at least one cooking appliance 3, irrespective of the level of food processing taking place.

Referring first to Figure 1, the system of the present invention includes a central display unit 18 incorporating a display processor 32 and a visual display 34. The display processor 32 is connected by a network 36 to a sensor processor 17 that receives data inputs of different parameters from a variety of sensors and meters within the system, discussed below. The display processor 32 is also connected by the network 36 to a variety of control elements, discussed below, that are to be controlled by the system. The control elements include motor controls for fans 4, 7, communication devices, energy meters and an energy supply system such as a gas isolation and proving unit 21 adapted selectively to actuate a gas isolation valve 22.

Referring now to Figure 2, in accordance with the present invention, one or more temperature sensors 9 are installed in the path of the exhaust from the cooking process, in particular in ducting 8 above the extract hood 2. Also, optic sensors 10 are installed in the extract hood 2 to detect for smoke/steam. A variable speed drive 11, in the form of a variable frequency inverter 11, is installed on the motor of the extract fan 7 to enable the speed of the extract fan motor to be varied as temperature and smoke/steam conditions dictate, as discussed in greater detail below. Air flow meters 13a and 13b are installed in both the extract ducting 8 and in the supply ducting 42, to continuously determine and monitor both the exhaust air and supply air velocities. In addition, sensors 14, 15 & 16 for unpleasant or dangerous gases, e.g. carbon dioxide, carbon monoxide and cooking gas, are incorporated in the system and when the respective detected level exceeds the maximum permitted to comply with health and safety regulations or guidelines, the speed of the extract fan 7 is increased to maximum, the fault shown on the display of the display processor 18 and an audio alarm 26 sounded. One carbon dioxide sensor 14a can be located in the cooking zone 1 and another carbon dioxide sensor 14b can be located in the adjacent area 6 such as the dining area in a restaurant.

A variable frequency inverter 12 is also installed on the motor of the air supply fan 4 to ramp the speed up and down in synchronism with the motor of the extract fan 7. Preferably the air supply fan 4 and the extract fan 7 are synchronously controlled so that 75-85% of the air extracted should be replaced with clean fresh air to ensure that the kitchen remains under negative pressure.

A sensor processor 17 monitors the inputs from the temperature sensor 9, optical sensors 10, flow meters 13a, and 13b and gas sensors 14, 15, 16 communicating information over the network to the display processor 18 for controlling the extract fan 7, supply fan 4 and safety equipment (alarms, fire suppression etc).

The fan drive demand speed is calculated within the sensor processor 17 and transmitted to the drive over the network to via the display unit 18, prominently located in the food processing area 1.

The sensor processor 17 periodically asks for data from the flow meters 13 representative of the respective current air flow rate. The air flow rate value is then sent to the display unit 18 for display and processing purposes. If the air extract flow rate falls below a predetermined safe threshold level, the gas isolation system 21 is signalled, a fault indicator (e.g. an LED) is illuminated, the gas isolation valve 22 is closed to shut off the gas supply to the cooking appliance 3, a hood alarm 26 is sounded and the speed of the extract fan 7 is increased to preset maximum value.

The sensor processor 17 also regularly checks the communications to each of the sensors. If any of these fail it then sends the designated fault information to the display unit 18 and the extract and supply fans 7, 4 are ramped up to a respective preset maximum speed. Typically, the sensor processor 17 can accommodate up to four temperature sensors 9, two optic sensors 10, the two air flow meters 13 and gas sensors 14, 15, 16. For additional hoods 2 or extract fans 7, plural sensor processors 17 can be linked together giving an increased capacity for the temperature and optic sensors.

An ambient thermostat 19 within the adjacent area 6, such as the dining area in a restaurant, or a food processing zone, controls the temperature in the area 6 and a frost thermostat 20 in the air supply ducting protects the air conditioning system 5 by ramping the supply fan 4 up to maximum preset speed if the temperature in the air supply ducting drops below a predetermined safe level.

If an abnormally high temperature is detected in the extract ducting 8 by the temperature sensor 9, which would indicate a likely fire situation, the gas isolation system 21 is signalled, the gas supply valve 22 is closed, an alarm 27 is sounded, the fault LED 18 on the display of the display unit 18 is lit and the fault thereby shown on the display unit 18. This feature allows the staff to extinguish a minor fire before it becomes a major incident (if this is the company policy) or evacuate the area.

If an even higher preset temperature is detected by the temperature sensor 9 a fire suppression system 29 can be initiated together with the main fire alarm system.

The gas isolation system 21 incorporates "gas proving", providing protection from gas leaks and loss of pressure. This provides a full pressure test of all supply pipework and detects all levels of leaks before the gas can be switched on to supply the cooking appliances 3.

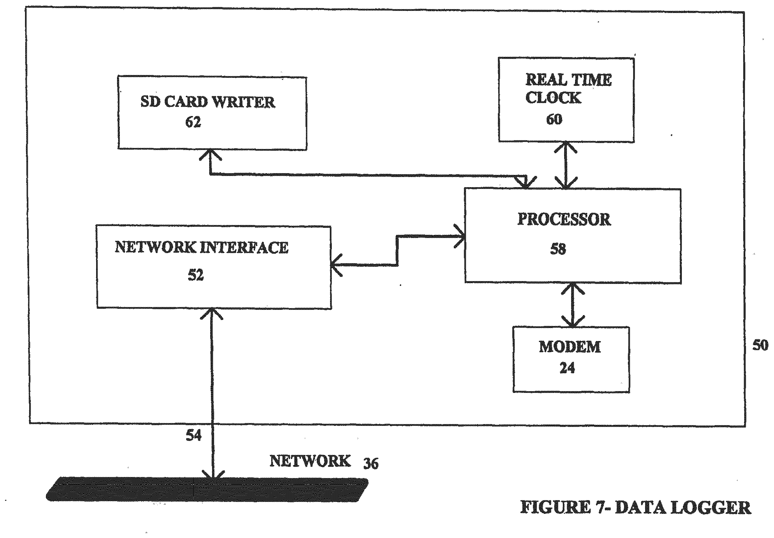

The set operating parameters for the system can be input as data, viewed and adjusted via a network connection 23 connected to the display unit 18 from a laptop 51 or hand held device. A data logger 50, described in greater detail with reference to Figure 7, including a modem 24 allows remote access, data input and adjustment of settings.

The system provides an energy monitoring connection 25 onto the network which allows for measuring and monitoring the energy usage in various parts of the restaurant or food processing area, typically the air extract, air conditioning, cooking appliances and lighting. The energy can be measured by energy meters 40 (Figure 1) connected to the network 36 (Figure 1). The energy monitoring connection 25 permits the energy monitoring data to be fed onto the network 36 (Figure 1) where data can be viewed, logged and downloaded remotely. This will enable the energy usage for the restaurant, or food processing area, to be analysed remotely and action taken to optimise energy efficiency.

The sensor processor 17 monitors the inputs from the temperature sensors 9 in the extract ducting 8, the optics sensors 10 in the extract hood 2, the gas sensors and the flow meters 13 in the extract and supply ducting, the information being communicated over the network 36 to the display unit 18, for controlling the extract fan 7 and the gas supply (a solenoid) valve 22. The network is preferably an open protocol free topology network designed for distributed applications.

The fan drive demand speed is calculated within the sensor processor 17 and transmitted over the network.

The variable speed drive does not under normal operation stop the fan completely and the minimum speed is normally set to between 30-50% of maximum. At a 40% fan speed only around 7% of the energy at maximum speed is consumed.

The sensor processor 17:
1. Polls the extract flow meter 13 for the current flow rate. This value is then sent to the display unit for display and processing purposes.
2. Regularly checks the communications to each of the sensors. If any of these fail it then sends the fault information to the display unit 18.
3. Monitors the exhaust air temperature and presence of steam and smoke at the cooking hood 2. It uses this information to control the speed of the extraction fan 7 as required.
4. Reports the temperature, flow rate, optics state, and sensor fault status to the display unit 18.

The display processor 32 (Figure 1) is made up of a processor printed circuit board (PCB) that communicates to the other devices in the system and a display PCB that controls the user interface elements of the unit such as the buttons, LEDs, audible alarms, and LCD.

The display processor 32 (Figure 1) uses information sent to it by the sensor processor 17 to control the speed of the extract fan 7 as follows:
1. If there are any faults in the system by a failure of the sensor processor 17 to communicate with any of the sensors or the failure of the display unit 18 to communicate to the sensor processor 17, the extract fan speed is set to 100% as a fail-safe mechanism. If the fault is also a high extract duct temperature, or low air flow in the extract or supply ducts, the alarm is sounded and the cooking gas supply is isolated.
2. If 1) is not the case and there are no faults detected in the system, then the extract fan runs at variable speeds as signalled from the sensor processor 17. If the override is set, then this overrides the fan speed to the preset maximum speed, e.g. 100%, until the override button is pressed again or for a period of time as set at installation, whichever occurs sooner.

The display unit 18 comprises a display module for displaying the following parameters on the display 34 (Figure 1), preferably an LCD display: supply fan speed, extract fan speed, duct temperature and flow rate. The display unit 18 further comprises connectors for interfacing to the Gas Isolation unit, emergency stop, and audio alarms 26, 27; a network bus for communication over the network to the sensor processor 17 and variable speed motor drive for the extract fan 7. The display unit 18 also comprises LEDS for displaying the following system status: power status; fault status; high temperature status; override Status and buttons to control: override of the fan drive to 100%, the screen of data being displayed on the LCD display 34 (Figure 1).

The temperature sensors 9 are located in the extract duct 8 and monitored by the sensor processor 17, which has the facility to support up to four temperature sensors 9 that can be used to monitor the exhaust air temperature with the highest temperature being used to determine the speed of the extract fan 7. When the sensor processor 17 is powered up, it polls each sensor 9 looking for a response to determine if the sensor is available. The numbers of sensors 9 present are then stored and each present sensor 9 is polled for its temperature.

The void in the extract hood 2 is monitored by the optics sensor 10 for the presence of smoke and steam. If the optics sensor 10 detects sufficient steam or smoke it instantly drives the fan speed to maximum (100%) and maintains this level until the amount of steam or smoke drops below a set threshold. Once this happens the speed is maintained at 100% for a period of time (set at installation) after which the speed at which the extract fan 7 is operated is largely determined by the temperature of the exhaust gas in the extraction ducting (i.e. the exhaust vent).

The optics sensor 10 comprises a receiver unit that controls and powers a transmitter unit. The receiver unit is powered from and communicates with the sensor processor 17 over the communications bus typically every 2 seconds. The transmitter unit is normally a Class 2 Laser whose output is modulated by the receiver at typically 800Hz. The receiver takes a first measurement whilst the laser is on and a second measurement during the subsequent period in which the laser is off. The second measurement is subtracted from the first to give a result which is free from the bias of ambient light picked up by the receiving unit. Obscuration of the light beam between the transmitter and receiver would be indicated by a reduction in the magnitude of the resultant reading.

A reading generated in this way is, however, likely to be subject to other variations. For instance, changes in temperature acting on the transmitter/receiver mounting might affect the alignment of the light-beam with the receiver, likewise settling with age. By advantage that the rate of change of these effects is likely to be significantly lower than the rate of change due to the effects of smoke and steam: a dynamic threshold may be generated which, when subtracted from the reading, would give a reliable measure of light obscuration due to smoke or steam. The dynamic threshold is calculated by taking a fixed percentage (typically 85-90%) of the average laser intensity over time. If the current measured laser intensity drops below the threshold, then a smoke flag is logged and sent to the sensor processor 17 the next time it is polled for data. The smoke present flag is only cleared after the data has been sent to the sensor processor 17, to ensure that the sensor processor 17 has logged the smoke condition.

Preferably, a fan is used in the housing of the optic sensor to create positive air pressure in the housing and thereby prevent fat and dirt from accumulating on the sensors and PCB's within the housing.

If smoke is detected, the receiver unit latches the smoke detection state. When the sensor processor 17 has read the smoke detection state from the receiver unit, the receiver unit then clears the latched state and continues monitoring.

Should the optic sensor 10 be completely obstructed (for example, less than 5% transmittance) then the laser is switched off. After a preset time period, for example 6.5 seconds, the laser pulses quickly to determine if there is still an obstruction. If there is, it waits another preset time period, for example 6.5 seconds, and tests again; otherwise it resumes its normal operation. This prevents the possibility of an injury to a person's eye, should they look deliberately and directly into the laser.

The optics lens PCB contains a mounting for a diffusion lens to minimize vibration and alignment issues between the laser transmitter and the receiver. The intensity of the received incident light is converted to a voltage by a photodiode operating in current mode with an opamp and associated circuitry. The signal is then fed into a gain stage which doubles the signal level to deal with low-level conditions. Both the pre-gain and post-gain stage signals are fed into the on board analogue to digital converter (ADC) of the microcontroller.

The airflow in the exhaust duct 8 is continually monitored by the flow meter 13 to ensure the flow rate is above the minimum required for gas-operated appliances.

The flow rate is polled for and transmitted to the sensor processor 17 over the network bus periodically, typically every second, and transmitted to the display unit 18 over the network for display purposes. When the flow rate falls below a preset level, indicating an unsafe condition, an alarm is sounded and the fault LED indicated on the display unit 18. When the gas isolation unit 21 is fitted, the gas supply to the cooking appliance 3 would be automatically turned off until the fault has been rectified. Similarly, any electrical power supply to the cooking appliance 3 would be switched off.

The temperature sensors 9 in the exhaust duct 8 monitor the temperature of the air in the exhaust duct 8. If the highest measured temperature of all the sensors 9 is above a high alarm setting, the sensor processor 17 sets a high temperature fault and communicates this to the display unit 18. The display unit 18 then indicates the fault both visually by illumination of the display panel LEDs and audibly with a buzzer. If the gas isolation 21 is fitted the display unit 18 shuts the cooking gas off to the cooking appliance 3. Similarly, any electrical power supply to the cooking appliance 3 would be switched off. Once the temperature cools below the high temperature alarm setting, the alarm state is cleared and the extract system reverts to normal operation. This then allows the gas isolation to be reset from the gas panel.

The high alarm setting is configured at installation time.

The extract fan 7 has a variable speed motor drive 11 that can be controlled over the network 36 (Figure 1). The minimum fan speed is set at installation and stored in the variable speed drive 11. The control from the display unit 18 cannot drive the extract fan 7 at any speed below this preset minimum level. The connection to the variable speed drive 11 is via a connector interface PCB that allows the network 36 (Figure 1) to be connected.

The remote access wireless modem 24 is used to allow remote systems to dial in and upload logged information. This also allows for remote configuration of the devices on the network 36 (Figure 1).

The gas isolation unit 21 controls a gas isolation valve 22 to shutoff of the gas to the cooking appliance(s) 3. The gas isolation unit 21 interfaces with the display unit 18 with the following connections: an emergency stop connection operated from a high temperature alarm; a gas ON feedback signal sent to the display unit 18; and a low air flow signal controlled from the display unit 18.

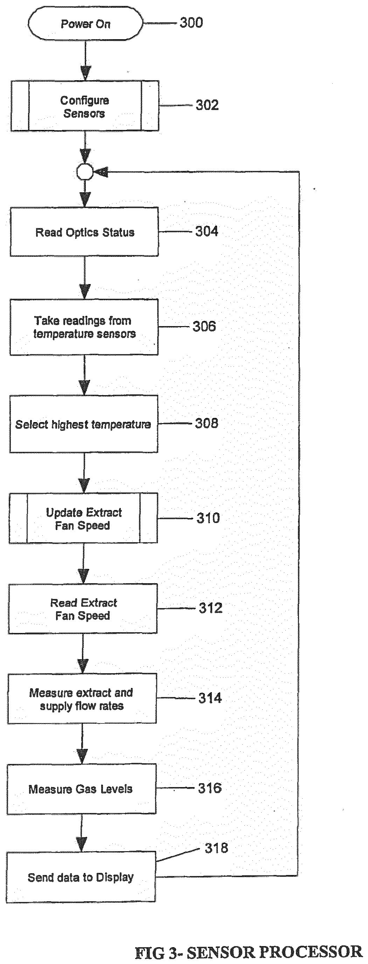

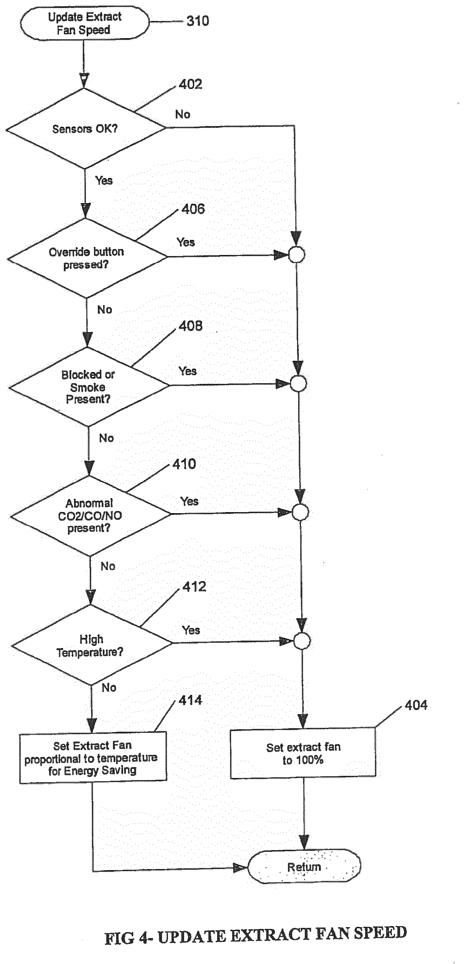

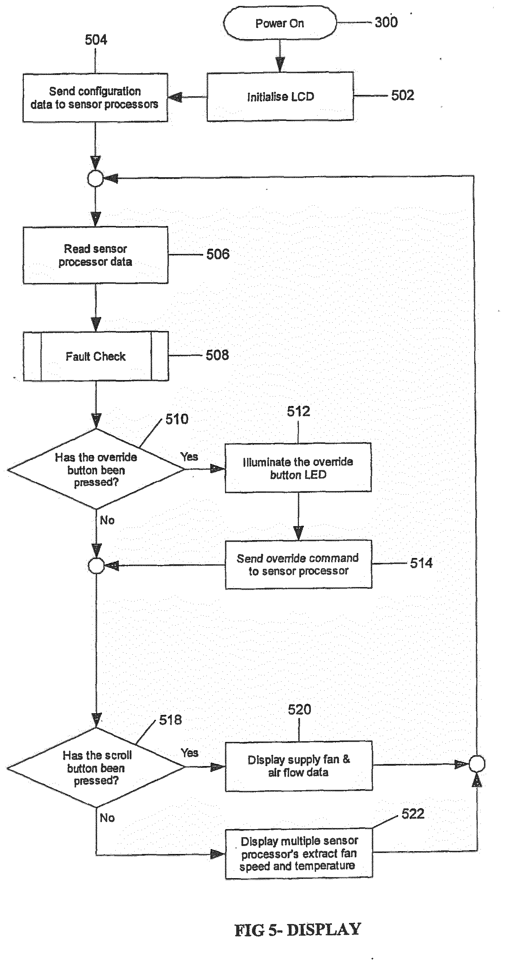

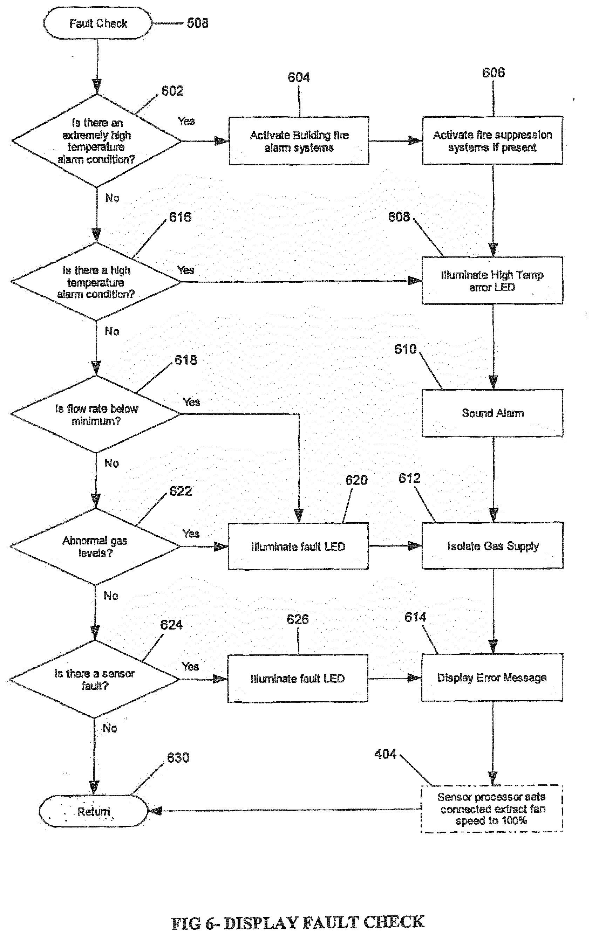

Figures 3 and 4 show the sensor processor flow charts. Figures 5 and 6 show the display flow charts.

The routine for the sensor processor 17 is shown in Figure 3.

After Power On in step 300 and configuration of the sensors in the configure sensors step 302, the status of the optic sensors 10 is determined in a read optics status step 304. Then, readings are taken from the temperature sensors 9 in step 306, and the highest temperature is subsequently selected in step 308. Thereafter the speed of the extract fan 7 is updated in step 310, which has a subroutine show in Figure 5.

Referring to Figure 4, in the update extract fan subroutine 310, initially it is determined whether or not the temperature sensors 9 are properly connected in a sensors OK step 402. If the answer is no, i.e. the temperature sensors 9 are not properly connected, then the logic immediately initiates a safety step 404 which instantaneously sets the speed of the extract fan 7 to a maximum (100%) value of the preset maximum speed. If however the answer is yes, i.e. the temperature sensors 9 are properly connected, then it is determined whether or not the override button has been pressed in a step 406. If the answer is yes, then again the logic immediately initiates the safety step 404. If the answer is no, then in cascading fashion it is determined in step 408 whether the optical sensors 10 indicate the presence of a blocked hood or smoke; in step 410 whether the gas sensors 14, 15, 16 indicate the presence of abnormal levels of dangerous gases; and in step 412 whether the temperature sensors 9 indicate the presence of an abnormally high temperature. In each case for steps 408, 410 and 412, if the answer is yes, then again the logic immediately initiates the safety step 404. If the answer is no, then the logic proceeds to the next step. Finally, after step 412, if the answer to step 412 is no, then in step 414 the speed of the extract fan is set proportional to the temperature according to the preset algorithm, to achieve the desired energy saving within the system. After this step 414, the subroutine returns to the routine of Figure 3.

In Figure 3, the next step of the routine is a step 312 to read the speed of the extract fan 7. Correspondingly, in the next step 314, the extract and supply flow rates are measured from the flow meters 13a and 13b. Finally, the gas levels are measured in a step 316. The data from the measuring and determining steps of the routine is sent to the display in a data sending step 318. Thereafter, the data gathering steps of the routine after the sensor configuring step 302 are repeated in successive loops, typically with a periodicity of about one second. This ensures that the status of the measurements is regularly periodically updated to cause an override if necessary and to ensure that the display shows a regularly updated summary of the status and measured parameters of the air control system.

The display operation routine is shown in Figure 5. On Power On in step 300 (as in Figure 3), the display device, e.g. a liquid crystal display (LCD) is initialized in step 502. Then in step 504 the display configuration data is sent to the sensor processor 17. The routine is then a loop. The sensor processor data is read in step 506, which is the data sent in data sending step 318. A fault check step 508 is then carried out, which has a subroutine shown in Figure 6.

In the fault check step 508, in step 602 it is determined if there is an extremely high temperature alarm condition, which has been preset, to indicate the possibility of a fire. If yes, the building fire alarm systems may be activated in step 604 and any fire suppression systems present may be activated in step 606. Then an LED on the display indicating a high temperature error is illuminated in step 608. An alarm is sounded in step 610, followed by isolation of the gas (and/or electrical) supply in step 612. An error message is displayed on the display in step 614. Then, the safety step 404 is initiated by the system processor 17 to immediately increase the speed of the extract fan to 100%, as discussed earlier. Thereafter, the subroutine terminates at a return step 630 back to the display routine in Figure 5.

If, in step 602, it is determined if there is not an extremely high temperature alarm, but instead there is a lower yet nevertheless undesired high temperature alarm condition, which has also been preset, then if step 616 determines a high temperature alarm condition, steps 604 and 606 concerning a fire condition are circumvented, but nevertheless the LED on the display indicating a high temperature error is illuminated in step 608, and the subsequent steps 610 to 614 are also followed.

If there is no high temperature alarm condition, in step 618 it is determined if the extract flow rate is below a minimum. If yes, an LED indicating a fault is illuminated in step 620, and the gas (and/or electrical) supply is isolated in step 612 discussed earlier. If no, the gas levels sensed by sensors 14, 15 and 16 are checked for abnormality in step 622, and if yes the LED illuminating step 620 is carried out. If not, then a sensor fault determining step 624 is carried out. Again, if yes an LED indicating a fault is illuminated in step 626, followed by the error message displaying step 614. If no, the subroutine terminates at the return step 630 back to the display routine in Figure 5.

Returning to Figure 5, the fault check step 508 is followed by a step 510 determining whether or not the override button has been pressed. If the answer is yes, then in step 512 the LED on the display corresponding to the override button is illuminated, and in step 514 an override command is sent to the sensor processor 17. Thereafter, a determination is made whether or not the scroll button has been pressed in step 518. If "no", the speed of the extract fans and temperatures are displayed for each extract hood in step 522 or if "yes", other operating parameters (supply fan speeds, air flows in ducts etc) are displayed. Faults are displayed as a priority. In either case, thereafter in a loop the logic returns to the read sensor processor data in step 506.

As described above, the remote access wireless modem 24 is used to allow remote systems to dial in and upload logged information. This also allows for remote setting and/or adjustments of the devices on the network 36. Figure 7 is a schematic block diagram of a data logging system, utilising the wireless modem 24, for use with the air control system of Figure 1 in accordance with a further embodiment of the present invention.

As described above, the air control system comprises a number of units (display unit 18 (which includes the display processor 32 and the visual display 34), variable speed fan drives 11, 12, sensor processor 17, energy meters 40 etc.) that inter-communicate via the network 36, which is typically a cable network although it may be wireless at least in part or in full. Each unit has an inbuilt network address and the units communicate with each other by use of these network addresses. Also communicating with the network 36 is wireless modem 24, as shown in Figure 1, which may be comprised in a computer such as a lap-top computer and is part of, or associated with, a data-logger 50.

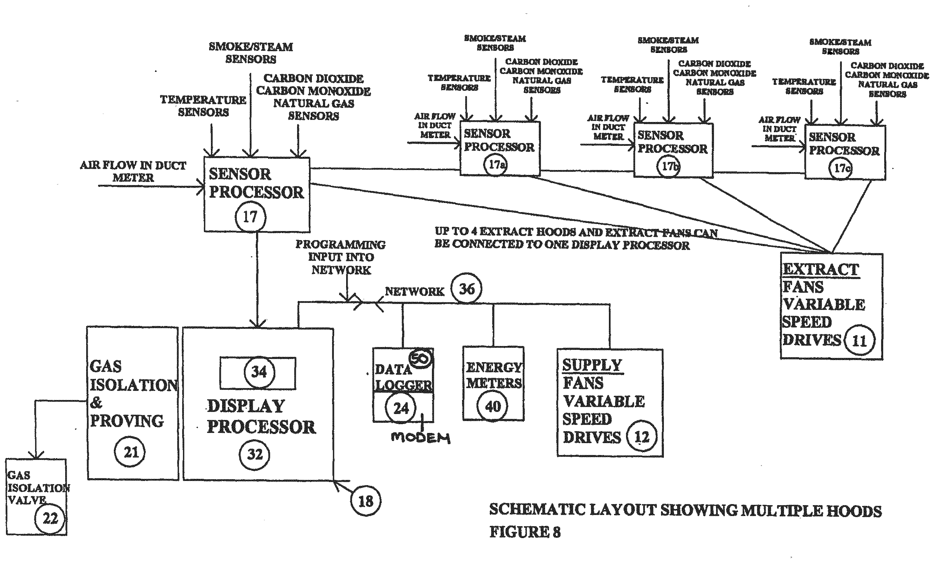

In a typical air control system installation in accordance with the present invention there may be provided: one display unit 18; one to four sensor processors 17; one to four extract variable speed drives 11; zero to two supply variable speed drives 12; and one data-logger 50. Figure 8 is a schematic block diagram of an air control system in accordance with a further embodiment of the present invention having multiple hoods, each having a respective sensor processor 17, 17a, 17b, 17c, each of which is connected to a respective variable speed drive 11 and which are commonly connected to the display processor 18, for example by a daisy-chain connection though the sensor processor 17.

To create a physical network, all of the devices are 'daisy-chained' together with network cable. Before the system is ready to operate, however, the network devices must be configured. The process of configuration is necessary to inform each device what its role is within the system and what the network addresses are of the other devices with which it must communicate. For example, each sensor processor 17 needs to know the address of the extract variable speed drive 11 that it is responsible for controlling so that it can send messages telling the respective variable speed drive what speed it should run at.

Network configuration has to be quick and easily operated by installation engineers. Software is provided which, via a laptop connected by cable into the network 36, finds all the devices and allows them to be configured. It downloads default settings to the system, including variable speed drives 11, 12 in the network 36 and allows operating parameters to be adjusted.

When a new system is configured, a 'database' file is created. This contains a complete set of configuration data for the system which is downloaded onto a central database at a central base station 56 (see Figure 2) for future reference.

The structure and function of the data-logger 50 are now described in greater detail.

As shown in Figure 7, the data logger 50 comprises a network interface 52 which can connect by a network connection 54 to the network 36. The network connection 54 may be constituted by, for example, a wired connection or a wireless connection. The wireless modem 24, e.g. typically a GPRS modem 24, is provided in the data logger 50 to communicate wirelessly, as required, with a remote base computer at the central base station 56. The wireless connection may utilise an internet- or web-based connection. A control processor 58 is commonly connected to the network interface 52 and the modem 24. The control processor 58 is in turn connected to a real time clock (RTC) 60 and to a data storage device 62, typically comprising a memory card writer, such as an SD card writer.

The data-logger 50 functions as a communications and data logging system (remote from the central base station 56) which is adapted to:-
1. Connect to the system network 36.
2. Log the values of selected variables on the network 36 periodically, according to timing provided by the clock 60.
3. Maintain a communications link to the remote base computer at the central base station 56 via data communications equipment, in particular the wireless modem 24.
4. Allow variables on the network 36 to be accessed remotely from the central base station 56 via data communications equipment, in particular the wireless modem 24.

The data logger 50 stores a set of pre-selected variables from the network 36 in the data storage device 62, for example by writing onto a removable SD card or similar data storage, at regular intervals. Remote communications are facilitated via the wireless modem 24 over which a command protocol is operated, allowing the remote base computer at the central base station 56 to:-
1. Retrieve the data log.
2. Delete the data log.
3. Set (and read back) which variables are logged.
4. Set (and read back) the time interval between logging events.
5. Remotely read and change the value of variables within the network.

The air control system of the preferred embodiments of the present invention therefore incorporates, in combination with an energy saving facility and several essential safety features, the ability to provide a service to the user of the air control system by continually monitoring the performance, remotely from a central base station, to maintain the optimum efficiency over many years. This facility additionally provides the ability to adjust settings of the air control system remotely from the central base station and to send reports to the user detailing issues affecting the performance of the air control system.

The preferred embodiments of present invention provide an energy saving and safety system for restaurants and commercial catering. The system controls and monitors the temperature, smoke and steam inside the extract hood by varying the extract fan speed as the temperature changes from a preset minimum level and/or when smoke, steam and noxious gases are detected.

Various modifications to the disclosed embodiments will be apparent to those skilled in the art, and such modifications are encompassed within the scope of the present invention as defined by the appended claims.

## Claims

1. An air control system for removing heat, smoke and steam from above a cooking appliance (3), the system comprising an air extraction assembly comprising an extract hood (2) defining an air inlet of the air extraction assembly, an extract fan (7) arranged to draw air into and through the extract hood (2) for exhausting air from a location above the cooking appliance (3) to an external location, and at least two sensors (9, 10, 14, 15, 16) located in the air extraction assembly for detecting at least two variable parameters of the air drawn through the extract hood (2), the at least two sensors (9, 10, 14, 15, 16) comprising a temperature sensor (9) for detecting temperature as a first variable parameter and a flow meter (13a) for detecting the flow rate of the extracted air, the flow rate comprising a second variable parameter, an air supplying assembly for supplying air in a food processing area (1) which contains the cooking appliance (3), the air supplying assembly comprising an air supply fan (4), and a control device for controlling the speed of the extract fan (7), the control device having a preset speed module which is adapted to define a first preset relationship between the detected temperature and the speed of the extract fan (7), and an override module which is adapted to increase the speed of the extract fan (7) to a preset maximum value when at least one of the variable parameters reaches a preset threshold.

2. An air control system according to claim 1 wherein the control device includes a sensor processor (17) that is adapted to receive at least one data input corresponding to the at least one variable parameter from the at least one sensor (9, 10, 14, 15, 16), a display unit (18) adapted to display at least a status of the air control system, and a network (36) interconnecting the sensor processor (17), the at least two sensors (9, 10, 14, 15, 16) and the display unit (18).

3. An air control system according to claim 1 or claim 2 wherein the at least two sensors (9, 10, 14, 15, 16) comprise at least one temperature sensor (9) for detecting the temperature of the extracted air and at least one optic sensor (10) installed in the air extraction assembly to detect for at least one of smoke and steam in the extracted air.

4. An air control system according to any one of claims 1 to 3 wherein the override module is adapted to increase the speed of the extract fan (7) to the preset maximum value when the flow rate of the extracted air detected by the flow meter drops below a preset minimum threshold.

5. An air control system according to any one of claims 1 to 4 further comprising a plurality of control elements to be controlled by the control device, the control elements including a motor control for the extract fan (7), and an energy supply controller (12) for controlling the supply of energy to the cooking appliance (3).

6. An air control system according to claim 5 wherein the energy supply controller (12) comprises a cooking gas isolation unit (21) adapted selectively to actuate a gas isolation valve (22).

7. An air control system according to any one of claims 1 to 6 wherein the control device is arranged for controlling the speed of the air supply fan (4), the control device being adapted to define a preset relationship between the speed of the extract fan (7) and the speed of the air supply fan (4).

8. An air control system according to any one of claims 1 to 7 wherein the control device is adapted periodically to determine at least one of the at least two variable parameters and thereby periodically to determine whether at least one of the variable parameters reaches a respective preset threshold, whereby the speed of the extract fan (7) is continually controlled over successive periods by the control device.

9. An air control system according to any one of claims 1 to 8 wherein the air supplying assembly further comprises a flow meter (13b) for detecting the flow rate of the supplied air.

10. An air control system according to any one of claims 1 to 9 further comprising a communication device (24) adapted to permit remote communication to the control device to permit remote access, data input and adjustment of settings of the air control system, wherein the communication device is connected to a data logger (50) which is connected to a network including the sensors, the data logger (50) being adapted to store operating variables of the air control system and selectively to transmit those variables to a remote base station (56) via the communication device (24).

11. An air control system according to claim 10 wherein the data logger (50) is adapted to communicate with the network (36) and/or the remote base station (56) periodically at selected time intervals determined by a clock.

12. An air control system according to claim 10 or claim 11 wherein the data logger (50) is adapted to receive operating variables of the air control system from the remote base station (56) via the communication device (24).

13. A method of removing heat, smoke and steam from above a cooking appliance (3), the method comprising the steps of;
(a) drawing air into and through an extract hood (12) for extracting air from a location above the cooking appliance (3) to an external location, the air being drawn by an extract fan (7), and supplying air in a food processing area (1) which contains the cooking appliance (3) by an air supplying assembly comprising an air supply fan (4);
(b) detecting at least a temperature of the extracted air and the flow rate of the extracted air;
(c) controlling the speed of the extract fan (7) by a preset relationship between the detected temperature and the speed of the extract fan (7); and
(d) increasing the speed of the extract fan (7) to a preset maximum value when the detected temperature reaches a preset threshold or when the detected flow rate of the extracted air drops below a preset minimum threshold.

14. A method according to claim 13 wherein the detecting step (b) is carried out periodically whereby the speed of the extract fan (7) is controlled continually.

15. A method according to claim 13 or claim 14 wherein the detecting step (b) detects at least one additional variable parameter in addition to the temperature of the extracted air, and step (d) is initiated if at least one of the at least one additional variable parameter reaches a respective preset threshold.

## Patentansprüche

1. Luftsteuersystem zum Abführen von Wärme, Rauch und Dampf von über einem Kochgerät (3), wobei das System Folgendes umfasst: eine Luftabsauganordnung, die Folgendes umfasst: eine Absaughaube (2), die einen Lufteinlass der Luftabsauganordnung definiert, ein Absauggebläse (7), das dazu angeordnet ist, Luft in und durch die Absaughaube (2) zu saugen, um Luft von einem Ort über dem Kochgerät (3) an einen externen Ort auszublasen, und mindestens zwei Sensoren (9, 10, 14, 15, 16), die sich in der Luftabsauganordnung befinden, um mindestens zwei variable Parameter der durch die Absaughaube (2) gesaugten Luft zu erfassen, wobei die mindestens zwei Sensoren (9, 10, 14, 15, 16) einen Temperatursensor (9) zum Erfassen der Temperatur als einen ersten variablen Parameter und einen Strömungsmesser (13a) zum Erfassen des Volumenstroms der abgesaugten Luft umfassen, wobei der Volumenstrom einen zweiten variablen Parameter umfasst, eine Luftzufuhranordnung zum Zuführen von Luft in einem Nahrungsmittelverarbeitungsbereich (1), der das Kochgerät (3) enthält, wobei die Luftzufuhranordnung ein Luftzufuhrgebläse (4) umfasst, und eine Steuervorrichtung zum Steuern der Drehzahl des Absauggebläses (7), wobei die Steuervorrichtung Folgendes aufweist: ein Vorgabedrehzahlmodul, das dazu angepasst ist, eine erste vorgegebene Beziehung zwischen der erfassten Temperatur und der Drehzahl des Absauggebläses (7) zu definieren, und ein Override-Modul, das dazu angepasst ist, die Drehzahl des Absauggebläses (7) auf einen vorgegebenen Maximalwert zu erhöhen, wenn mindestens einer der variablen Parameter einen vorgegebenen Grenzwert erreicht.

2. Luftsteuersystem nach Anspruch 1, wobei die Steuervorrichtung Folgendes umfasst einen Sensorprozessor (17), der dazu angepasst ist, mindestens eine, dem mindestens einen variablen Parameter von dem mindestens einen Sensor (9, 10, 14, 15, 16) entsprechende Dateneingabe zu empfangen, eine Anzeigeeinheit (18), die dazu angepasst ist, mindestens einen Status des Luftsteuersystems anzuzeigen, und ein Netz (36), das den Sensorprozessor (17), die mindestens zwei Sensoren (9, 10, 14, 15, 16) und die Anzeigeeinheit (18) miteinander verbindet.

3. Luftsteuersystem nach Anspruch 1 oder Anspruch 2, wobei die mindestens zwei Sensoren (9, 10, 14, 15, 16) mindestens einen Temperatursensor (9) zum Erfassen der Temperatur der abgesaugten Luft und mindestens einen in der Luftabsauganordnung installierten optischen Sensor (10) zum Erfassen von Rauch und/oder Dampf in der abgesaugten Luft umfassen.

4. Luftsteuersystem nach einem der Ansprüche 1 bis 3, wobei das Override-Modul dazu angepasst ist, die Drehzahl des Absauggebläses (7) auf den vorgegebenen Maximalwert zu erhöhen, wenn der von dem Strömungsmesser erfasste Volumenstrom der abgesaugten Luft unter einen vorgegebenen Mindestgrenzwert sinkt.

5. Luftsteuersystem nach einem der Ansprüche 1 bis 4, weiter umfassend eine Vielzahl von von der Steuervorrichtung zu steuernden Steuerelementen, wobei die Steuerelemente eine Motorsteuerung für das Absauggebläse (7) und einen Energiezufuhrkontroller (12) zum Steuern der Zufuhr von Energie zu dem Kochgerät (3) umfassen.

6. Luftsteuersystem nach Anspruch 5, wobei der Energiezufuhrkontroller (12) eine Kochgas-Absperreinheit (21) umfasst, die dazu angepasst ist, ein Gasabsperrventil (22) selektiv zu betätigen.

7. Luftsteuersystem nach einem der Ansprüche 1 bis 6, wobei die Steuervorrichtung dazu angeordnet ist, die Drehzahl des Luftzufuhrgebläses (4) zu steuern, wobei die Steuervorrichtung dazu angepasst ist, in vorgegebenes Verhältnis zwischen der Drehzahl des Absauggebläses (7) und der Drehzahl des Luftzufuhrgebläses (4) zu definieren.

8. Luftsteuersystem nach einem der Ansprüche 1 bis 7, wobei die Steuervorrichtung dazu angepasst ist, regelmäßig mindestens einen der mindestens zwei variablen Parameter zu bestimmten und dadurch regelmäßig festzustellen, ob mindestens einer der variablen Parameter einen jeweiligen vorgegebenen Grenzwert erreicht, wodurch die Drehzahl des Absauggebläses (7) von der Steuervorrichtung kontinuierlich über aufeinanderfolgende Zeiträume gesteuert wird.

9. Luftsteuersystem nach einem der Ansprüche 1 bis 8, wobei die Luftzufuhranordnung weiter einen Strömungsmesser (13b) zum Erfassen des Volumenstroms der zugeführten Luft umfasst.

10. Luftsteuersystem nach einem der Ansprüche 1 bis 9, weiter umfassend eine Kommunikationsvorrichtung (24), die dazu angepasst ist, die Fernkommunikation zu der Steuervorrichtung zu ermöglichen, um Zugriff, Dateneingabe und Anpassung von Einstellungen des Luftsteuersystems aus der Ferne zu ermöglichen, wobei die Kommunikationsvorrichtung mit einem Datenlogger (50) verbunden ist, der mit einem die Sensoren umfassenden Netz verbunden ist, wobei der Datenlogger (50) dazu angepasst ist, Betriebsvariablen des Luftsteuersystems zu speichern und diese Variablen über die Kommunikationsvorrichtung (24) selektiv zu einer entfernten Basisstation (56) zu übertragen.

11. Luftsteuersystem nach Anspruch 10, wobei der Datenlogger (50) dazu angepasst ist, regelmäßig, in von einer Zeituhr bestimmten ausgewählten Zeitabständen mit dem Netz (36) und/oder der entfernten Basisstation (56) zu kommunizieren.

12. Luftsteuersystem nach Anspruch 10 oder Anspruch 11, wobei der Datenlogger (50) dazu angepasst ist, über die Kommunikationsvorrichtung (24) Betriebsvariablen von der entfernten Basisstation (56) zu empfangen.

13. Verfahren zum Abführen von Wärme, Rauch und Dampf von über einem Kochgerät (3), wobei das Verfahren folgende Schritte umfasst:
(a) Saugen von Luft in und durch eine Absaughaube (12) zum Absaugen von Luft von eine Ort über dem Kochgerät (3) an einen externen Oft, wobei die Luft von einem Absauggebläse (7) gesaugt wird, und Zuführen von Luft in einen Nahrungsmittelverarbeitungsbereich (1), der das Kochgerät (3) enthält, durch eine ein Luftzufuhrgebläse (4) umfassende Luftzufuhranordnung;
(b) Erfassen von mindestens einer Temperatur der abgesaugten Luft und des Volumenstroms der abgesaugten Luft;
(c) Steuern der Drehzahl des Absauggebläses (7) durch eine vorgegebene Beziehung zwischen der erfassten Temperatur und der Drehzahl des Absauggebläses (7); und
(d) Erhöhen der Drehzahl des Absauggebläses (7) auf einen vorgegebenen Maximalwert, wenn die erfasste Temperatur einen vorgegebenen Grenzwert erreicht, oder wenn der erfasste Volumenstrom der abgesaugten Luft unter einen vorgegebenen Mindestgrenzwert sinkt.

14. Verfahren nach Anspruch 13, wobei der Erfassungsschritt (b) regelmäßig ausgeführt wird, wodurch die Drehzahl des Absauggebläses (7) kontinuierlich gesteuert wird.

15. Verfahren nach Anspruch 13 oder Anspruch 14, wobei der Erfassungsschritt (b) mindestens einen zusätzlichen variablen Parameter zusätzlich zu der Temperatur der abgesaugten Luft erfasst und Schritt (d) ausgelöst wird, falls mindestens einer des mindestens einen zusätzlichen variablen Parameters einen jeweiligen vorgegebenen Grenzwert erreicht.

## Revendications

1. Système de régulation de l'air pour supprimer la chaleur, la fumée et la vapeur d'au-dessus d'un appareil de cuisson (3), le système comprenant un appareil d'extraction d'air comportant une hotte d'extraction (2) définissant une entrée d'air de l'appareil d'extraction d'air, un ventilateur d'extraction (7) placé de sorte à aspirer l'air dans et via la hotte d'extraction (2) pour évacuer l'air d'un endroit donné au-dessus de l'appareil de cuisson (3) vers un endroit situé à l'extérieur, et au moins deux capteurs (9, 10, 14, 15, 16) situés dans l'appareil d'extraction d'air pour détecter au moins deux paramètres variables de l'air aspiré via la hotte d'extraction (2), les au moins deux capteurs (9, 10, 14, 15, 16) comportant un capteur de température (9) pour détecter la température en tant que premier paramètre variable et un débitmètre (13a) pour détecter le débit de l'air extrait, le débit comprenant un deuxième paramètre variable, un appareil d'alimentation d'air pour alimenter en air une zone de transformation d'aliments (1) qui contient l'appareil de cuisson (3), l'appareil d'alimentation d'air comprenant un ventilateur d'alimentation d'air (4), et un dispositif de régulation pour contrôler la vitesse du ventilateur d'extraction (7), le dispositif de régulation comportant un module de vitesse préréglé qui est adapté pour définir une première relation préréglée entre la température détectée et la vitesse du ventilateur d'extraction (7), et un module de commande prioritaire qui est adapté pour augmenter la vitesse du ventilateur d'extraction (7) jusqu'à une valeur maximale préréglée lorsque au moins un des paramètres variables atteint un seuil préréglé.

2. Système de régulation de l'air selon la revendication 1, dans lequel le dispositif de régulation comprend un processeur de capteur (17) qui est adapté pour recevoir au moins une entrée de données correspondant à le au moins un paramètre variable du le au moins un capteur (9, 10, 14, 15, 16), un afficheur (18) adapté pour visualiser au moins un état du système de régulation de l'air, et un réseau (36) qui relie le processeur de capteur (17), les au moins deux capteurs (9, 10, 14, 15, 16) ainsi que l'afficheur (18).

3. Système de régulation de l'air selon, soit la revendication 1, soit la revendication 2, dans lequel les au moins deux capteurs (9, 10, 14, 15, 16) comprennent au moins un capteur de température (9) pour détecter la température de l'air extrait et au moins un capteur optique (10) installé dans l'appareil d'extraction d'air pour détecter au moins de la fumée ou de la vapeur que contient l'air extrait.

4. Système de régulation de l'air selon l'une quelconque des revendications précédentes 1 à 3, dans lequel le module de commande prioritaire est adapté de sorte à augmenter la vitesse du ventilateur d'extraction (7) jusqu'à la valeur maximale préréglée, lorsque le débit de l'air extrait détecté par le débitmètre chute en deçà d'un seuil minimal préréglé.

5. Système de régulation de l'air selon l'une quelconque des revendications 1 à 4, comprenant en outre une pluralité d'éléments de contrôle que doit contrôler un dispositif de régulation, les éléments de contrôle incluant une commande de moteur du ventilateur d'extraction (7), et un contrôleur d'alimentation en énergie (12) pour contrôler l'alimentation en énergie de l'appareil de cuisson (3).

6. Système de régulation de l'air selon la revendication 5, dans lequel le contrôleur d'alimentation en énergie (12) comprend une unité d'arrêt de gaz de cuisson (21) adaptée pour activer, de façon sélective, une vanne d'arrêt de gaz (22).

7. Système de régulation de l'air selon l'une quelconque des revendications 1 à 6, dans lequel le dispositif de régulation est agencé pour contrôler la vitesse du ventilateur d'alimentation d'air (4), le dispositif de régulation étant adapté pour définir une relation préréglée entre la vitesse du ventilateur d'extraction (7) et la vitesse du ventilateur d'alimentation d'air (4).

8. Système de régulation de l'air selon l'une quelconque des revendications 1 à 7, dans lequel le dispositif de régulation est périodiquement adapté pour déterminer au moins l'un des au moins deux paramètres variables et, par là, pour déterminer si au moins l'un des paramètres variables atteint un seuil préréglé respectif, en vertu duquel la vitesse du ventilateur d'extraction (7) est continuellement contrôlé sur des périodes successives par le deuxième dispositif de régulation.

9. Système de régulation de l'air selon l'une quelconque des revendications 1 à 8, dans lequel l'appareil d'alimentation d'air comprend en outre un débitmètre (13b) pour détecter le débit de l'air alimenté.

10. Système de régulation de l'air selon l'une quelconque des revendications 1 à 9, comprenant un dispositif de communication (24) adapté pour permettre une communication à distance avec le dispositif de régulation et permettre ainsi l'accès à distance, l'entré de données et l'ajustement des réglages du système de régulation de l'air, dans lequel le dispositif de communication est connecté à un enregistreur de données (50) qui est relié à un réseau incorporant les capteurs, l'enregistreur de données (50) étant adapté pour stocker des variables d'exploitation du système de régulation de l'air et pour transmettre ces variables d'une façon sélective à une station de base distante (56) via le dispositif de communication (24).

11. Système de régulation de l'air selon la revendication 10, dans lequel l'enregistreur de données (50) est adapté de sorte à communiquer avec le réseau (36) et/ou la station de base distante (56) périodiquement à des intervalles de temps sélectionnés que détermine une horloge.

12. Système de régulation de l'air selon, soit la revendication 10, soit la revendication 11, dans lequel l'enregistreur de données (50) est adapté pour recevoir des variables d'exploitation du système de régulation de l'air de la station de base distante (56) via le dispositif de communication (24).

13. Procédé destiné à supprimer la chaleur, la fumée et la vapeur d'au-dessus d'un appareil de cuisson (3), le procédé comprenant les étapes consistant à :
(a) extraire l'air dans et via une hotte d'extraction (2) pour évacuer l'air d'un endroit donné au-dessus de l'appareil de cuisson (3) vers un emplacement situé à l'extérieur, l'air étant aspiré par un ventilateur d'extraction (7), et à alimenter en air une zone de transformation d'aliments (1) qui contient l'appareil de cuisson (3) par un appareil d'alimentation d'air comportant un ventilateur d'alimentation d'air (4) ;
(b) détecter au moins une température de l'air extrait et le débit de l'air extrait ;
(c) contrôler la vitesse du ventilateur d'extraction (7) par une relation préréglée entre la température détectée et la vitesse du ventilateur d'extraction (7) ; et
(d) accroître la vitesse du ventilateur d'extraction (7) jusqu'à une valeur maximale préréglée lorsque la température détectée atteint un seuil préréglé ou lorsque le débit détecté de l'air extrait chute en deçà d'un seuil minimal préréglé.

14. Procédé selon la revendication 13, dans lequel l'étape de détection (b) a lieu périodiquement, en vertu de quoi la vitesse du ventilateur d'extraction (7) est continuellement contrôlée.

15. Procédé selon, soit la revendication 13, soit la revendication 14, dans lequel l'étape de détection (b) détecte au moins un paramètre variable supplémentaire en plus de la température de l'air extrait, et l'étape (d) est déclenchée si au moins un du au moins un paramètre variable supplémentaire atteint un seuil préréglé respectif.
